# EUROPÄISCHE PATENTSCHRIFT

(11) **EP 0 415 174 B1**
(45) Veröffentlichungstag und Bekanntmachung des Hinweises auf die Patenterteilung: **24.11.1993**
(21) Anmeldenummer: 90115549.9
(22) Anmeldetag: 14.08.1990
(51) Int. Cl.: A47J 29/00

(54) **Verfahren zum Zentrieren des Eidotters eines Eies während des Kochvorganges**
Method for centering the yolk of an egg during cooking
Méthode pour centrer le jaune d'oeuf durant la cuisson

(30) Priorität: 26.08.1989 DE 3928346
(43) Veröffentlichungstag der Anmeldung: 06.03.1991
(73) Patentinhaber: ERICH BERGMEIER MASCHINENFABRIK, D-32120 Hiddenhausen (DE)
(72) Erfinder: Bergmeier, Gerd, D-32120 Hiddenhausen 2 (DE)
(74) Vertreter: Stracke, Alexander, Dipl.-Ing.

(56) Entgegenhaltungen:
- FR-A- 2 168 905
- US-A- 4 157 060
- US-A- 4 276 820
- US-A- 4 686 895
- PATENT ABSTRACTS OF JAPAN vol. 014, no. 014 (C-674)12. Januar 1990 & JP-A-1 256 913 ( HITACHI ) 13. Oktober 1989

## Beschreibung

Die vorliegende Erfindung betrifft ein Verfahren zum Zentrieren des Eidotters eines Eies während des Kochvorganges.

Es ist bekannt, daß der Eidotter eines Eies während der Lagerung des Eies im rohen Zustand innerhalb des Eies nach oben steigt. Dies führt dazu, daß sich zwischen Dotter und Eischale nur noch eine geringe Schicht von Eiweiß befindet, in Extremfällen kann es sogar vorkommen, daß der Eidotter das Eiweiß bereichsweise vollkommen verdrängt. Wird ein derartiges Ei nun gekocht und anschließend geschält, so kommt es sehr häufig zu einer Beschädigung der vergleichsweise dünnen, den Eidotter noch einhüllenden Eiweißschicht, insbesondere bei der maschinellen Schälung von Eiern ist diese Gefahr besonders groß. Es kann sogar festgestellt werden, daß der Eidotter aus dem gekochten Ei herausfällt, so daß ein derartiges Ei praktisch nicht mehr nutzbar ist.

Der durch diese Gegebenheiten eintretende Schaden ist bei der kommerziellen Verarbeitung von Eiern sehr hoch.

Es hat deshalb nicht an Versuchen und Bemühungen gefehlt, diesem Übelstand abzuhelfen.

Dabei zielen die entsprechenden Bemühungen darauf ab, den Eidotter innerhalb des Eies wieder zu zentrieren, d.h., den Eidotter in eine Lage zu bringen, in der er allseitig von einer relativ dicken Schicht Eiweiß umschlossen ist. Dies ist dann der Fall, wenn der Eidotter mittig zur Längsachse des Eies liegt und in Richtung der Längsachse soweit von den Enden des Eies entfernt ist, daß die Dicke der Eiweißschicht zwischen dem dem Dotter am nächsten liegenden Ende des Eies etwa der Dicke der den Eidotter radial umschließenden Eiweißschicht entspricht.

Eier werden nun im allgemeinen mit lotrecht verlaufender Längsachse - und dabei mit ihrer Spitze nach unten zeigendgelagert.

Demzufolge wandert der Eidotter bei längerer Lagerung des Eies in Richtung der Längsachse nach oben, also zu der der Spitze des Eies abgewandten, runden Seite.

Von diesen Erkenntnissen ausgehend ist nun schon versucht worden, eine Zentrierung des Eidotters dadurch zu bewirken, daß die noch rohen Eier vor dem Kochen gegenüber ihrer ursprünglichen Lagerposition um 180° gewendet werden in der Hoffnung, daß sich aufgrund der neuen Lagerposition der Eidotter aus seiner unerwünschten Randlage wieder in die Mitte des Eies zurückbewegt.

Abgesehen davon, daß mit dieser Methode kaum eine Gewähr verbunden ist, daß der jeweilige Eidotter auch die gewünschte, günstige Lage einnimmt, ist diese Methode auch recht umständlich. Dabei muß bedacht werden, daß insbesondere beim Eierkochen im kommerziellen Bereich vergleichsweise große Mengen Eier pro Zeiteinheit verarbeitet werden. Um hier eine Größenordnung zu nennen, sei darauf verwiesen, daß leistungsfähige Eierkochmaschinen in der Lage sind, zwischen 10 000 und 20 000 Eier/Std. zu kochen.

Entsprechend hoch ist dann natürlich der Aufwand, um die für eine Tagesproduktion benötigten Eier aus ihrer ursprünglichen Lagerpositon heraus in eine demgegenüber um 180° veränderte Lage zu bringen.

Es ist auch schon versucht worden, wie aus dem Patentschrift US-A-4686895 bekannt, den Eidotter dadurch zu zentrieren, daß die Eier während des Kochvorganges in eine gleichsinnige Rotationsbewegung versetzt werden.

Auch diese Methode ist wenig effektiv, insbesondere deshalb, weil hiermit ein Wandern des Eidotters in Richtung der Längsachse nicht bewerkstelligt werden kann. Der Eidotter ändert seine Lage bezüglich der Längsachse des Eies praktisch nicht, allenfalls ist mit dem gleichsinnigen Rotieren eines Eies während des Kochvorganges zu erreichen, daß sich der Eidotter in etwa radial zur Längsachse des Eies zentriert.

Da, wie eingangs schon erwähnt wurde, gerade die Lageveränderung des Eidotters in Richtung der Längsachse eines Eies erhebliche Nachteile bei der Weiterverarbeitung gekochter Eier verursacht, ist die zuletzt genannte Methode ebenfalls ungeeignet, um die erwähnten Probleme zu lösen.

Der vorliegenden Erfindung liegt die Aufgabe zugrunde, ein Verfahren aufzuzeigen, mit dem eine praxisgerechte und effektive Zentrierung eines Eidotters eines Eies während des Kochvorganges ermöglicht wird, insbesondere eine Verschiebung des Eidotters in Richtung der Längsachse des Eies.

Zur Lösung dieser Aufgabe wird gemäß vorliegender Erfindung vorgeschlagen, daß das Ei während des Kochvorganges bis zur Verfestigung des Eiweißes intervallartig und in jeweils gegenläufigen Richtungen um seine Längsachse gedreht wird.

Es hat sich gezeigt, daß diese Verfahrensweise zu einer hochwirksamen und optimalen Zentrierung des Eidotters eines Eies führt. Durch Versuche konnte ermittelt werden, daß eine Zentrierung des Eidotters nicht nur radial zur Längsachse eines Eies stattfindet, sondern insbesondere auch eine Verschiebung in Richtung der Längsachse, und zwar dergestalt, daß der Eidotter wie gewünscht zur Mitte des Eies hin verschoben wird, so daß zu beiden Enden des Eies hin eine großzügige Umschließung des Eidotters mit Eiweiß gewährleistet ist.

Es wird angenommen, daß dieser verblüffende Erfolg darauf zurückzuführen ist, daß durch die Drehung des Eies in gegenläufige Richtungen ein ständiges Umspülen des Eidotters mit noch flüssigem Eiweiß stattfindet und daß durch die während des Kochvorganges von der Schalenseite her allmählich zunehmende Verfestigung des Eiweißes der für das Umspülen des Eidotters zur Verfügung stehenden Raum immer kleiner wird, so daß der Eidotter zwangsläufig in Richtung der Längsachse wandern muß, da die Verfestigung des Eiweißes von der Außenseite des Eies her mehr oder minder gleichmäßig stattfindet, also auch in Richtung der Längsachse.

Außerdem wurde festgestellt, daß bei der Anwendung des erfindungsgemäßen Verfahrens die Schichtenbildung bei der Verfestigung des Eiweißes, die sehr häufig insbesondere bei braunschaligen Eiern festgestellt werden konnte, weitestgehend beseitigt ist. Möglicherweise geht dieser Effekt auf die gleichen Ursachen zurück, die für die optimale Zentrierung des Eidotters innerhalb des Eies vermutet werden.

In jedem Falle konnte mit der Anwendung des erfindungsgemäßen Verfahrens erreicht werden, daß eine Beschädigung der gekochten Eier beim Schälen durch nicht vorhandene oder zu geringe Umhüllung des Eidotters mit verfestigtem Eiweiß praktisch verhindert ist.

Damit wird die Ausfallquote beim maschinellen Kochen und anschließendem, ebenfalls vorzugsweise maschinellen Schälen von gekochten Eiern nahezu auf null gesenkt. Weiterbildungsformen des Verfahrens sind in den Unteransprüchen 2-5 erfaßt.

Grundsätzlich ist die Anwendung des erfindungsgemäßen Verfahrens bei jeder beliebigen Lage der Längsachse eines Eies möglich, insbesondere im Hinblick auf die Gestaltung entsprechender Vorrichtungen zur Durchführung des Verfahrens ist es aber gleichwohl vorteilhaft, das Ei während des Kochvorganges in eine Position zu bringen, in der die Längsachse horizontal verläuft.

Unter Bezugnahme auf die beigefügte Zeichnung wird das erfindungsgemäße Verfahren im folgenden noch einmal ausführlich erläutert.

Im einzelnen zeigen:
- Fig. 1: eine schematisch dargestellte Seitenansicht einer Vorrichtung zur intervallartigen und gegenläufigen Drehung eines Eies während des Kochvorganges
- Fig. 2: eine Ansicht in Richtung des Pfeiles II in Fig. 1.

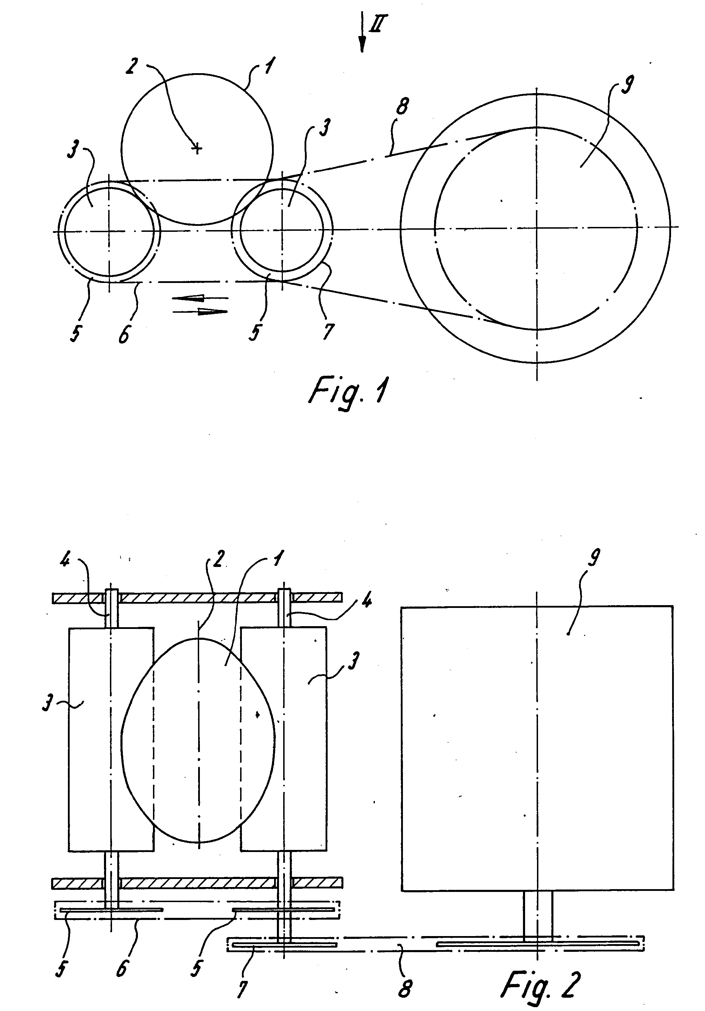

In den Fig. 1 und 2 ist mit dem Bezugszeichen 1 jeweils ein Ei bezeichnet, welches mit horizontalliegender Längsachse 2 auf zwei parallel zueinander verlaufenden Rollen 3 gelagert ist.

Die Achsen 4 der Rollen 3 sind an einem Ende mit Antriebsrädern 5, beispielsweise Kettenrädern, ausgestattet.

Die Antriebsräder 5 sind beispielsweise über eine umlaufende Kette 6 miteinander gekoppelt.

Eine der Achsen 4 der beiden Rollen 3 ist zusätzlich mit einem weiteren Kettenrad 7 ausgestattet, welches über eine weitere Kette 8 mit einem Antriebsmotor 9 verbunden ist. Die Drehrichtung des Antriebsmotors 9 ist umkehrbar.

Dadurch ist es möglich, das auf den beiden Rollen 3 liegende Ei 1 intervallartig und in jeweils gegenläufigen Richtungen um seine Längsachse 2 zu drehen.

Zumindest die beiden, das Ei 1 tragenden Rollen 3 der in den Fig. 1 und 2 stark schematisiert gezeigten Vorrichtung sind im Bereich eines Kochraumes einer Eierkochmaschine angeordnet.

Wird nun ein Ei 1 innerhalb der Eierkochmaschine mit entsprechender Wärme beaufschlagt, was beispielsweise durch Wasserdampf erfolgen kann, und wird darüber hinaus das Ei 1 über die beiden Rollen 3 intervallartig und jeweils gegenläufig um seine Längsachse 2 gedreht, bis sich das Eiweiß verfestigt hat, so wird der Eidotter des Eies 1 einerseits radial zur Längsachse 2 des Eies zentriert und andererseits in Richtung der Längsachse 2 soweit verschoben, daß der Dotter zu beiden in Richtung der Längsachse 2 liegenden Enden des Eies 1 einen ausreichenden Abstand aufweist. Entsprechend ist der Eidotter nach dem Kochen des Eies 1 mehr oder minder gleichmäßig von einer dicken Eiweißschicht umgegeben, so daß die Gefahr vermieden ist, daß beim anschließenden Schälen des Eies 1 die Eiweißschicht bis zum Eidotter hin beschädigt wird mit der Gefahr, daß der Eidotter aus dem gekochten und verfestigten Eiweiß herausfällt.

Es hat sich gezeigt, daß es sinnvoll ist, das Ei 1 während des Kochvorganges relativ häufig in unterschiedliche Richtungen zu drehen. Darüber hinaus hat es sich als sinnvoll erwiesen, die Drehzahl relativ hoch zu wählen, um einen optimalen Zentriereffekt zu erzielen.

Es ist im Einzelfall durchaus denkbar, daß die Gesamtkochzeit für ein Ei denjenigen Zeitraum überschreitet, der für die Verfestigung des Eiweißes notwendig wäre. Es ist unbedeutend, ob das Ei auch über diese für die Verfestigung des Eiweißes benötigte Zeit hinaus weiter gegenläufig gedreht wird oder nicht. Im Sinne der hier maßgebenden Überlegungen ist es von ausschlaggebender Bedeutung, daß das intervallartige, gegenläufige Drehen des Eies solange durchgeführt wird, bis eine mehr oder minder vollständige Verfestigung des Eiweißes eingetreten ist.

## Patentansprüche

1. Verfahren zum Zentrieren des Eidotters eines Eies während des Kochvorganges, **dadurch gekennzeichnet,** daß das Ei (1) während des Kochvorganges bis zur Verfestigung des Eiweißes intervallartig und in jeweils gegenläufigen Richtungen um seine Längsachse (2) gedreht wird.

2. Verfahren nach Anspruch 1, dadurch gekennzeichnet, daß das Ei (1) bei in horizontaler Lage befindlicher Längsachse (2) gegenläufig gedreht wird.

3. Verfahren nach Anspruch 1 oder 2, dadurch gekennzeichnet, daß die Intervalle der gegenläufigen Drehung des Eies (1) um seine Längsachse (2) - bezogen auf die Verfestigungszeit des Eiweißes - relativ kurz sind.

4. Verfahren nach einem oder mehreren der Ansprüche 1 bis 3, dadurch gekennzeichnet, daß die Dauer der Intervalle unterschiedlicher Drehrichtungen untereinander gleich oder annähernd gleich ist.

5. Verfahren nach einem oder mehreren der Ansprüche 1 bis 4, dadurch gekennzeichnet, daß das Ei (1) mit relativ hoher Drehzahl und demzufolge relativ hoher Umfangsgeschwindigkeit in gegenläufige Richtungen gedreht wird.

## Claims

1. A method of centering the yolk of an egg during the cooking procedure, characterised in that the egg (1) is rotated about its longitudinal axis (2) in an interval mode and in respectively opposite directions during the cooking procedure until the egg white sets.

2. A method according to claim 1 characterised in that the egg (1) is rotated in opposite directions with the longitudinal axis (2) in a horizontal position.

3. A method according to claim 1 or claim 2 characterised in that the intervals involving the oppositely directed rotary movement of the egg (1) about its longitudinal axis (2) are relatively short, relative to the egg white setting time.

4. A method according to one or more of claims 1 to 3 characterised in that the durations of the intervals involving different directions of rotation are the same or approximately the same as each other.

5. A method according to one or more of claims 1 to 4 characterised in that the egg (1) is rotated in opposite directions at a relatively high speed of rotation and accordingly at a relatively high peripheral speed.

## Revendications

1. Procédé de centrage d'un jaune d'oeuf pendant le processus de cuisson, **caractérisé en ce que** l'oeuf (1) est périodiquement tourné autour de son grand axe (2), pendant le processus de cuisson, jusqu'au figeage du blanc d'oeuf, et dans des sens chaque fois opposés.

2. Procédé selon la revendication 1, caractérisé en ce que l'oeuf (1) est tourné en sens inverse, lorsque son grand axe (2) est situé horizontalement.

3. Procédé selon la revendication 1 ou 2, caractérisé en ce que la période de la rotation inversée de l'oeuf (1) autour de son grand axe (2) est relativement courte, par rapport à la durée de figeage du blanc d'oeuf.

4. Procédé selon l'une ou plusieurs des revendications 1 à 3, caractérisé en ce que les différentes périodes à sens de rotation inversés sont égales ou à peu près égales.

5. Procédé selon l'une ou plusieurs des revendications 1 à 4, caractérisé en ce que l'oeuf (1) est tourné dans des sens opposés, à vitesse de rotation relativement élevée et, par conséquent, avec une vitesse périphérique relativement élevée.
